# EUROPÄISCHE PATENTSCHRIFT

(11) **EP 2 565 018 B1**
(45) Veröffentlichungstag und Bekanntmachung des Hinweises auf die Patenterteilung: **30.12.2020**
(21) Anmeldenummer: 12006168.4
(22) Anmeldetag: 30.08.2012
(51) Int. Cl.: B33Y 50/00, B29C 64/393

(54) **Datenmodell zur Beschreibung eines mit Hilfe eines Schichtaufbauverfahrens herzustellenden Bauteils**
Data model for describing a component manufactured using a layer construction method
Modèle de données pour décrire un composant à fabriquer à l'aide d'un procédé de fabrication additive

(30) Priorität: 31.08.2011 DE 102011111541
(43) Veröffentlichungstag der Anmeldung: 06.03.2013
(73) Patentinhaber: FIT AG, 92331 Lupburg (DE)
(72) Erfinder: Fruth, Carl, 92331 Parsberg (DE)
(74) Vertreter: Schneider, Andreas

(56) Entgegenhaltungen:
- DE-A1-102006 056 165
- US-A- 5 198 159
- US-A1- 2003 167 099
- PULAK MOHAN PANDEY ET AL: "Slicing procedures in layered manufacturing: a review", RAPID PROTOTYPING JOURNAL, vol. 9, no. 5, 1 December 2003 (2003-12-01), pages 274-288, XP055230282, ISSN: 1355-2546, DOI: 10.1108/13552540310502185

## Beschreibung

Die Erfindung betrifft den Bereich der additiven Fertigungsverfahren. Genauer betrifft die Erfindung ein Verfahren zum schichtweisen Aufbau eines Bauteils unter Verwendung eines Datenmodells. Zudem betrifft die Erfindung eine Schichtbauanlage, die zur Durchführung dieses Verfahrens ausgebildet ist sowie ein Computerprogramm für eine solche Schichtbauanlage.

Schichtbauverfahren dienen zur Herstellung von Bauteilen aus schichtweise aufgebrachtem, verfestigbarem Material, wie Harz, Kunststoff, Metall oder Keramik und werden beispielsweise zur Fertigung von technischen Prototypen verwendet. Ein solches Bauteil wird dabei auch als Formkörper oder allgemein als Objekt bezeichnet. Anlagen, mit denen ein solches Schichtbauverfahren durchgeführt wird, werden auch als Rapid Prototyping-Systeme bezeichnet. Schichtbauverfahren und -anlagen sind beispielsweise aus US5198159, US2003167099 und "Slicing procedures in layered manufacturing: A review" von Pandey et al. (Rapid Prototyping Journal, Dezember 2003) bekannt.

Bei einem derartigen additiven Fertigungsverfahren werden Schichten eines Aufbaumaterials sukzessive übereinander aufgetragen. Vor dem Auftragen der jeweils nächsten Schichten werden die dem Querschnitt des zu fertigenden Objekts entsprechenden Stellen in den jeweiligen Schichten selektiv verfestigt. Das Verfestigen erfolgt beispielsweise durch lokales Erhitzen eines pulverförmigen Schichtrohmaterials mit Hilfe einer Strahlungsquelle. Indem gezielt Strahlung in geeigneter Weise in die gewünschten Bereiche eingebracht wird, kann eine exakt definierte, beliebig geartete Objektstruktur erzeugt werden. Das Einbringen von Strahlungsenergie zum Verfestigen des Aufbaumaterials erfolgt beispielsweise mit Hilfe eines ablenkbaren Laserstrahls. Ein solches additives Verfahren ist insbesondere zur Herstellung von dreidimensionalen Körpern verwendbar, indem mehrere dünne, individuell gestaltete Schichten aufeinanderfolgend erzeugt werden. Verschiedene auf dem Prinzip des Schichtaufbaus beruhende additive Fertigungsverfahren und Anlagen zu deren Durchführung sind aus dem Stand der Technik bekannt, so beispielsweise Stereolithographie, selektives Laserschmelzen, selektives Maskensintern, Fused Deposition Moulding, Polyjet, 3D Printing usw.

Bei einem schichtweisen Aufbau von Bauteilen mit Hilfe additiver Fertigungsverfahren treten beim Abkühlen bzw. Aushärten der Aufbaumaterialien Spannungen auf, die zu einer Verformung einzelner Schichten und damit zu einem Verzug im Bauteil führen. Dies wirkt sich nachteilig auf die Maßhaltigkeit des Bauteils aus und kann zum Abbruch des schichtweisen Aufbaus führen.

Aus dem Stand der Technik sind verschiedene Maßnahmen bekannt, einen Materialschwund während des Aufbaus zu minimieren. Zu diesem Zweck wird versucht, das Auftreten von Spannungen lokal zu begrenzen, indem einzelne Schichten in kleinere zweidimensionale Schichtbereiche aufgeteilt werden, welche zum Zweck des Spannungsabbaus nacheinander verfestigt bzw. verschmolzen werden. Derartige Schichtbereiche werden auch als Regionen oder Partitionen bezeichnet. Bei dieser "Schichtpartitionierung" erfolgt anders ausgedrückt die Aufteilung in Bereiche stets schichtorientiert. Die Betrachtung ist stets zweidimensional (2D-Sichtweise) . Wegen der real vorhandenen, wenn auch sehr geringen Schichtdicke spricht man auch von einer "2,5D-Sichtweise".

Der Energieeintrag in diese Schichtbereiche erfolgt beispielsweise beim Laserschmelzen dadurch, daß der Laserstrahl linienförmig, nämlich unter Bildung von eng benachbarten geradlinigen Schraffurlinien, eine zeilenweise Abtastung bzw. Rasterung des betreffenden Flächenbereiches vornimmt, um den Schichtbereich zu verfestigen. Es ist bekannt, dieses Schraffur-oder Belichtungsmuster, insbesondere die Schraffurrichtung, von Schicht zu Schicht oder auch von Schichtbereich zu Schichtbereich zu variieren, um die Ausbildung von Vorzugsrichtungen zu vermeiden, die zu einem Materialverzug bei der Fertigung führen können. Auch ein regelmäßiger Versatz der zweidimensionalen Regionen von Schicht zu Schicht zur Erzeugung einer Überlappung mit jeweils benachbarten Schichten, ist bekannt. Bei einzelnen Verfahrens-Material-Kombinationen sind die genannten Maßnahmen hinreichend erfolgreich. Bei anderen führen sie nicht zu dem gewünschten Erfolg.

Ein Beispiel für eine herkömmliche Technik, bei der verschiedene Maßnahmen zur Minimierung von Materialschwund miteinander kombiniert sind, ist in US 5,198,159 beschrieben. Es wird dort zum einen der Einsatz von Kompositschichten vorgeschlagen, bei denen einzelne Schichtabschnitte vollständig, andere Schichtabschnitte aber zunächst unvollständig verfestigt werden. Diese unvollständige verfestigten Schichtabschnitte sich noch in der Lage, sich zu deformieren und können daher Materialschwund und Spannungen, die an den vollständig verfestigten Schichtabschnitten auftreten, teilweise absorbieren. Zum anderen wird ein Aufbau von Objektinnerem und Objekthülle mit unterschiedlichen Schichtdicken vorgeschlagen. Durch eine geringe Schichtdicke bei der Herstellung der Objekthülle soll eine möglichst glatte Oberfläche erreicht werden. Außerdem wird für diejenigen Schichten, aus denen das Objektinnere entsteht, eine andere Form des Energieeintrags vorgeschlagen, als für diejenigen Schichten, welche die Objekthülle bilden. All diese Maßnahmen beruhen dabei auf einer klassischen, schichtgebundenen 2D-Sichtweise.

Eine Aufgabe der vorliegenden Erfindung ist es, das Auftreten von Bauteilverzug zu verringern. Diese Aufgabe wird durch ein Verfahren nach Anspruch 1 bzw. durch eine Schichtbauanlage nach Anspruch 9 bzw. durch ein Computerprogramm nach Anspruch 10 gelöst.

Die im Folgenden im Zusammenhang mit dem Datenmodell erläuterten Vorteile und Ausgestaltungen gelten sinngemäß auch für das erfindungsgemäße Verfahren bzw. eine zur Durchführung des Verfahrens mit Hilfe des Datenmodells ausgebildete Schichtbauanlage und umgekehrt. Vorteilhafte Ausführungen der Erfindung sind in den Unteransprüchen angegeben.

Alle bekannten Lösungen betrachten das Problem von Schicht zu Schicht und erzeugen im wesentlichen flache Schichtbereiche senkrecht zur Aufbaurichtung. Die freien Ränder dieser Bereiche liegen stets parallel zur Aufbaurichtung. Die wesentlichen Spannungen treten daher, wenn auch reduziert, parallel zur Aufbaurichtung auf. Dies führt zu einem Verzug im Bauteil.

Die Erfindung behält das Prinzip eines schichtweisen Aufbaus des Bauteils grundsätzlich bei. Es erfolgt jedoch eine nicht an einzelne Schichten gebundene, d.h. schichtübergreifende Aufteilung des Objektes in 3D-Volumenbereiche, wobei hierunter "echte" dreidimensionale Volumenbereiche zu verstehen sind und es sich um frei definierbare Volumina und nicht etwa um parallel zur Aufbaurichtung ausgerichtete gleichförmige Würfel oder Voxel handelt. Es findet mit anderen Worten eine Aufteilung des Bauteils in schichtübergreifende Volumenbereiche statt. Ein einzelner Volumenbereich kann dabei in Einzelfällen auch lediglich eine einzige Schicht umfassen. Üblicherweise erstreckt sich ein Volumenbereich jedoch über mehrere Schichten. An die Stelle der aus dem Stand der Technik bekannten Schicht- oder Würfelpartitionierung tritt somit eine schichtunabhängige Volumenpartitionierung des gesamten Objektes. Selbstverständlich kann zusätzlich innerhalb einzelner Aufbauschichten wiederum eine schichtinterne Aufteilung in Regionen erfolgen.

Zur Steuerung der Schichtbauanlage werden daher erfindungsgemäß Steuerungsdaten verwendet, welche auf der Grundlage bzw. unter Berücksichtigung einer derartigen Volumenpartitionierung des Objektes erzeugt sind. Die Steuerungsdaten umfassen ein entsprechendes Datenmodell zur Beschreibung des herzustellenden Bauteils bzw. werden unter Verwendung eines solchen Datenmodells erzeugt.

Das erfindungsgemäße Datenmodell zur Beschreibung eines mit Hilfe eines Schichtaufbauverfahrens herzustellenden Bauteils zeichnet sich dadurch aus, daß das Datenmodell eine wenigstens teilweise Aufteilung des Bauteils in eine Anzahl von Volumenbereiche beschreibt, wobei wenigstens ein Volumenbereich mehr als eine Aufbauschicht umfaßt.

Anders formuliert beschreibt das Datenmodell ein in eine Anzahl von Volumenbereiche aufgeteiltes Bauteil, wobei wenigstens einer der Volumenbereiche zwei oder mehr zueinander benachbarte Aufbauschichten teilweise oder vollständig umfaßt. Die Daten beschreiben mit anderen Worten das Bauteil unabhängig von Aufbauschichten und schichtübergreifend mit Hilfe von dreidimensionalen Volumenbereichen. Im Ergebnis ist das Bauteil in Volumenbereiche unterteilt, von denen jeder wenigstens Teile von mindestens zwei benachbarten Schichten umfaßt.

Das erfindungsgemäße Verfahren zum schichtweisen Aufbau eines Bauteils zeichnet sich dadurch aus, daß wenigstens ein Aufbauschritt mittelbar oder unmittelbar unter Verwendung eines solchen Datenmodells erfolgt. Das bedeutet, daß der schichtweise Aufbau, insbesondere der Materialauftrag und/oder das Verfestigen des Aufbaumaterials, nach dem beschriebenen Datenmodell erfolgt bzw. daß der schichtweise Aufbau unter Verwendung von Steuerungsdaten 6 erfolgt, welche auf der Grundlage des Datenmodells erzeugt wurden.

Die erfindungsgemäße Schichtbauanlage zeichnet sich dadurch aus, daß sie zur Durchführung des Verfahrens nach den Ansprüchen 1 bis 8 ausgebildet ist.

Das erfindungsgemäße Computerprogramm zeichnet sich durch Computerprogrammanweisungen aus zur Steuerung der Schichtbauanlage zur Ausführung des Verfahrens, wenn das Computerprogramm auf einem Rechner ausgeführt wird.

Das Datenmodell und/oder die Steuerungsdaten sind dabei vorteilhafterweise in einem universell einsetzbaren, standardisierten Datenformat gefaßt, das unabhängig von dem gewählten Aufbauverfahren einsetzbar ist.

Alle im Zusammenhang mit der Erzeugung des Datenmodells, der Erzeugung von Steuerungsdaten für eine Schichtbauanlage bzw. die Durchführung des erfindungsgemäßen Verfahrens bzw. die Steuerung der Schichtbauanlage erforderlichen Rechenoperationen werden durch eine oder mehrere Datenverarbeitungseinheiten ausgeführt, die zur Durchführung dieser Operationen ausgebildet sind. Jede dieser Datenverarbeitungseinheiten weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß den beschriebenen Verfahren. Bei den Funktionsmodulen kann es sich um Hardwaremodule oder Softwaremodule handeln. Mit anderen Worten kann die Erfindung, soweit es die Datenverarbeitungseinheit betrifft, entweder in Form von Computerhardware oder in Form von Computersoftware oder in einer Kombination aus Hardware und Software verwirklicht werden. Soweit die Erfindung in Form von Software, also als Computerprogrammprodukt, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Zusammenfassend läßt sich festhalten: Die vorliegende Erfindung löst sich von der herkömmlichen zweidimensionalen, schichtbezogenen Betrachtungsweise. Anstelle der Zerlegung einer Bauteilschicht in unterschiedliche Bereiche innerhalb der einzelnen Schicht wird das Bauteil als ganzes in mehrere, sich vorzugsweise voneinander unterscheidende, unregelmäßige dreidimensionale Bereiche aufgeteilt (3D-Partitionierung). Vorzugsweise ergeben sich dabei freie Kanten und Flächen schräg zur Aufbaurichtung. Durch die schräg zur Aufbaurichtung verlaufenden Grenzflächen der Volumenbereiche ergeben sich von Schicht zu Schicht unterschiedliche, beispielsweise eine unterschiedliche Größe und/oder Form aufweisende Querschnitte. Der Aufbauprozeß jeder Schicht des fertigen Bauteils wird somit wegen des Aufbaus der einzelnen Volumenbereiche in der Regel mehrfach unterbrochen. Aufgrund der Schrägstellung der Grenzflächen erfolgt die Unterbrechung des Schichtaufbaus dabei vorzugsweise in von Schicht zu Schicht unterschiedlichen Abständen sowie vorzugsweise in innerhalb der Schicht unregelmäßigen Abständen. Im Ergebnis erfolgt ein Aufteilen bzw. Umlenken von Spannungen innerhalb des Bauteils.

Dadurch, daß freie Spannungen in verschiedene Raumrichtungen geleitet werden, wird das Entstehen von Vorzugsrichtungen sehr stark reduziert. Bei der Bauteilerzeugung entstehend daher weniger Spannungen, die zu Formveränderungen führen. Zugleich ändert sich die Spannungsverteilung über das Gesamtbauteil. Durch entsprechende Ausgestaltung der Nachbar-Volumenbereiche (Offsets, Überlappungsbereiche, Spalten etc.) werden die von einzelnen Volumenbereichen abgegebenen Spannungen aufgenommen und weitergeleitet, ohne daß es zu einer Spannungsverstärkung kommt, bzw. es kommt zu einer Kompensation von Spannungen. Im Ergebnis führt dies zu einer Spannungs-Homogenisierung des Bauteils, wodurch der Verzug im Bauteil minimiert wird. Daher können auch neuartige Aufbaumaterialien verwendet werden, die bisher nicht zur Anwendung kommen konnten. Der Aufbau mit Hilfe additiver Fertigungsverfahren kann mit einer höheren Genauigkeit oder aber mit größerer Geschwindigkeit erfolgen.

Die 3D-Volumenbereiche der vorliegenden Erfindung sind in Abgrenzung von solchen Aufbautechniken, bei denen parallel zur Aufbaurichtung ausgerichtete gleichförmige Würfel oder Voxel verwendet werden, frei definierbar. Das bedeutet einerseits, daß die das Bauteil bildenden 3D-Volumenbereiche vorzugsweise voneinander verschieden sind. Es bedeutet andererseits, daß jeder der 3D-Volumenbereiche vorzugsweise unregelmäßig geformt ist. Mit anderen Worten treten innerhalb eines Volumenbereiches vorzugsweise keine symmetrisch verlaufenden und/oder wiederkehrenden Formen auf.

Zur Vermeidung von Spannungen innerhalb des Bauteils während der Fertigung beschreibt das verwendete Datenmodell die Aufteilung in Volumenbereiche derart, daß wenigstens einer der Volumenbereiche eine schräg zur Aufbaurichtung verlaufende Außenfläche aufweist. Das bedeutet, daß wenigstens eine der Schichten eines Volumenbereiches eine Außen- oder Randfläche aufweist, die schräg zu der Aufbaurichtung verläuft. Vorzugsweise bilden aber eine Vielzahl der Schichten eines Volumenbereiches Außen- oder Randflächen, die schräg zu der Aufbaurichtung verlaufen. Schräg zur Aufbaurichtung bedeutet dabei, daß die Außenfläche nicht senkrecht zu der Aufbaurichtung verläuft, sondern schräg im Raum liegt. Eine solche Außenfläche definiert entweder als Grenzfläche die Grenze einer Schicht bzw. eines Schichtteilbereiches oder die Grenze eines Volumenbereiches zu einer benachbarten Schicht, einem benachbarten Schichtteilbereich oder einem benachbarten Volumenbereich. Oder die Außenfläche definiert die Außengrenze des Bauteils bzw. die Grenze des Bauteilinneren zu der Bauteiloberfläche.

Der Verlauf der Grenzflächen schräg zur Aufbaurichtung dient zur Abgabe von schräg gerichteten Spannungen an benachbarte Volumenbereiche. Vorzugsweise weisen im wesentlichen alle Volumenbereiche wenigstens eine schräg zur Aufbaurichtung verlaufende Außenfläche auf. Ganz besonders vorteilhaft ist es, wenn dies für im wesentlichen alle Außenflächen zutrifft. Eine Schrägstellung einer Außenfläche bedeutet, daß übereinanderliegende, benachbarte Schichten eines Volumenbereiches unterschiedliche Querschnittsflächen aufweisen. Anders ausgedrückt ist das Bauteil in Volumenbereiche mit sich in Aufbaurichtung ändernden Querschnittsflächen aufgeteilt. Bei einem mehrere Schichten umfassenden Volumenbereich, der in jeder Schichtebene wenigstens einen Teilbereich einer Schicht aufweist, bedeutet dies, daß sich die Grenze des Volumenbereiches vorzugsweise stetig über eine Schicht hinaus in eine oder mehrere benachbarte Schichten hinein fortsetzt. Im Ergebnis ist jede Schicht des fertigen Bauteils aus einer Anzahl unterschiedlich geformter, unterschiedliche großer Teilbereiche gebildet. Zugleich unterscheiden sich auch in benachbarten Schichten übereinanderliegende Teilbereiche in Form und Größe voneinander.

Die bei der Bauteilerzeugung während des Aushärtens bzw. Verfestigens des Aufbaumaterials entstehenden Spannungen werden zumindest anteilig in unterschiedliche Richtungen, vorzugsweise in alle drei Raumdimensionen geleitet. Dies führt letztendlich zu einer Eliminierung oder deutlichen Reduzierung dieser Spannungen und des damit einhergehenden Verzuges des Bauteils. Erfindungsgemäß wird dies erreicht, indem die Volumenbereiche derart gewählt sind, daß die freien Spannungen an den Partitionsgrenzen schräg zu der Aufbaurichtung gerichtet werden. Im Ergebnis weisen die Spannungsvektoren in eine Vielzahl unterschiedlicher Richtungen. Dadurch kommt es zu einer Verteilung und/oder teilweisen Auslöschung der Spannungen. Verbleibende Spannungen werden vorzugsweise in verringertem Umfang, jedenfalls aber nicht verstärkt von benachbarten Volumenbereichen aufgenommen. Diese benachbarten Volumenbereiche sind ebenfalls hinsichtlich des Spannungsverhaltens optimiert, d.h. weisen ebenfalls Außenflächen auf, welche im Blick auf eine optimale Aufnahme und Weiterleitung der Spannungen ausgeführt sind. Im Ergebnis kommt es zu einer wenigstens teilweisen Kompensation der Spannungen über die Volumenbereiche des Bauteils betrachtet.

Größe und Form der Volumenbereiche sowie insbesondere der Verlauf der Außenflächen der Volumenbereiche sind derart optimiert, daß die sich nach Fertigstellung des Bauteils ergebenden Spannungen minimal sind.

Hierzu weisen die Volumenbereiche einen dreidimensionalen Offset auf. Ein solcher Offset mindestens eines Volumenbereiches dient zur Erzeugung eines Überlappbereiches oder eines Spaltes zwischen mindestens zwei Volumenbereichen. Der dreidimensionale Offset ist vorzugsweise in unterschiedlichen Raumrichtungen unterschiedlich groß. Überlappen sich Volumenbereiche zumindest teilweise, ist in einer Ausführung der Erfindung ein mehrfacher Energieeintrag in die Überlappungsbereiche vorgesehen, so daß das betreffende Aufbaumaterial mehrfach verfestigt wird. Durch die Mehrfachverfestigung ändert sich die Dichte des Materials in diesen Bereichen. Die Volumenbereiche können jedoch auch voneinander beabstandet vorgesehen sein, so daß sie durch Spalten oder dergleichen voneinander getrennt werden. Spalten und/oder Überlappbereiche können aber auch wiederum als separate eigene Volumenbereiche definiert sein. Der Offset einzelner Volumenbereiche kann in Abhängigkeit von geometrischen Nachbarschaftsbeziehungen aneinandergrenzender Volumenbereiche unterschiedlich sein.

In einer weiteren Ausführung der Erfindung ist mindestens ein Volumenbereich vollständig von einem Überlapp eines anderen Volumenbereiches überdeckt.

Die Definition der Volumenbereiche und damit die Partitionierung des Bauteils erfolgt vorzugsweise zumindest auch unter Berücksichtigung geometrischer Kennwerte des zu fertigenden Bauteils. Die Partitionierung kann aber auch unter Verwendung analytischer, errechneter Kennwerte berechnet werden. Eine andere Möglichkeit besteht darin, die Partitionierung unter Verwendung von Meß- oder Sensorwerten, beispielsweise unter Verwendung von Meßwerten zur Verzugsspannung an einem oder mehreren Meßpunkten des Bauteils, zur Laufzeit während des Aufbaus zu berechnen. Ebenfalls möglich ist es, die Partitionierung unter Verwendung ausgewerteten Meß- oder Sensorwerte im Anschluß an den Aufbau für einen folgenden Aufbau zu berechnen. Die Partitionierung kann aber auch durch eine Simulation errechnet werden. Schließlich ist es ebenfalls möglich, die Partitionierung zufällig zu errechnen. Darüber hinaus ist es möglich, mehrere der oben beschriebenen Methoden zur Definition der Volumenbereiche miteinander zu kombinieren.

Die Partitionierung wird vorteilhafterweise auch für die Berechnung von Hilfskonstruktionen verwendet, beispielsweise zur Berechnung von Stützstrukturen zur Stützung bestimmter Bereiche, insbesondere überstehender Bereiche des Bauteils, oder zur Berechnung von Verstärkungen einer solchen Stützkonstruktion.

Das Datenmodell des herzustellenden Bauteils umfaßt mit den Angaben zu den Volumenbereichen Beschreibungsdaten der Bauteilgeometrie. In einer weiteren bevorzugten Ausführungsform der Erfindung definiert das Datenmodell für jeden Volumenbereich wenigstens einen Aufbauparameter. Vorzugsweise definieren die Daten für jede Schicht bzw. jeden Schichtabschnitt innerhalb eines Volumenbereiches wenigstens einen Aufbauparameter.

Bei dem wenigstens einen Aufbauparameter handelt es sich insbesondere um einen oder mehrere die Verfestigung des Aufbaumaterials betreffenden Parameter. So wird durch diesen Parameter insbesondere auf die Art und Weise des Materialauftrags und/oder der Verfestigung Einfluß genommen.

Beispielsweise wird durch den oder die Aufbauparameter die Reihenfolge der zu verfestigenden Volumenbereiche festgelegt. So ist es beispielsweise möglich, daß der Aufbau des Bauteils volumenbereichsweise erfolgt derart, daß einzelne Volumenbereiche Schicht für Schicht nacheinander aufgebaut werden. Anders ausgedrückt können insbesondere bei der Verwendung von selektiv materialauftragenden additiven Fertigungsverfahren einzelne Volumenbereiche auch über mehrere Schichten hinweg aufgebaut werden, bevor weitere Volumenbereiche, ebenfalls über mehrere Schichten hinweg, aufgebaut werden.

Alternativ dazu kann ein Aufbauparameter auch festlegen, daß die Volumenbereiche gleichzeitig aufgebaut werden. In diesem Fall werden jeweils sich entsprechende Schichten mehrerer Volumenbereiche gleichzeitig verfestigt.

In einer Ausführung der Erfindung legt ein Aufbauparameter für jeden Volumenbereich bzw. jede einzelne Schicht eines Volumenbereiches ein bestimmtes Füllmuster (z. B. Schraffur) fest. In einer weiteren Ausführung der Erfindung weist mindestens ein Volumenbereich ein von einem anderen Volumenbereich abweichendes Füllmuster auf. In einer weiteren Ausführung ist mindestens ein Volumenbereich über mehrere Schichten mit ein und demselben Füllmuster belegt. In einer weiteren Ausführung sind unterschiedliche Volumenbereiche mit unterschiedlichen Füllmustern belegt. In einer weiteren Ausführungsform ist mindestens ein Volumenbereich mit einem schichtweise unterschiedlichen Füllmuster belegt.

Beispielsweise hat es sich als vorteilhaft erwiesen, Füllmuster derart festzulegen, daß keine langen geraden Linien entstehen, da diese hohe Spannungen während der Bauteilfertigung hervorrufen können. Je nach Anwendungsfall werden daher nicht nur mit Hilfe von Vektoren beschreibbare Füllmuster-Linien verwendet. Es kommen auch Füllmuster zum Einsatz, bei denen es in Abhängigkeit von dem verwendeten Aufbaumaterial zu dynamischen Energieeinträgen in punkt- oder flächenförmigen Arealen kommt. In diesem Fall werden bestimmte Punkte oder Flächen in der zu verfestigenden Schicht angefahren und der Energieeintrag erfolgt dann während einer definierten Verweilzeit, während der zugleich die Bestrahlungsstärke bzw. Energieeintragsmenge variiert werden kann. In diesem Zusammenhang sei darauf hingewiesen, daß die Erfindung auch bei Aufbauverfahren anwendbar ist, bei denen die Verfestigung nicht durch einen Linien oder Punkte beschreibenden Laser, sondern durch eine flächige Bestrahlung des Aufbaumaterials oder durch selektiven Materialauftrag erfolgt.

In einer Ausführung der Erfindung beschreibt ein Aufbauparameter den Energieeintrag und definiert damit für einzelne Schichten oder schichtübergreifend für jeden Volumenbereich unterschiedliche Verfestigungsenergien. In einer weiteren Ausführung definiert ein Aufbauparameter auch die Verwendung einer bestimmten zur Auswahl stehenden Strahlungsquelle zur Materialverfestigung.

In einer Ausführung der Erfindung legt ein Aufbauparameter die Verwendung eines bestimmten Aufbaumaterials für einen Teil des Volumenbereiches oder den gesamten Volumenbereich fest, so daß innerhalb des Bauteils bzw. innerhalb eines Volumenbereiches unterschiedliche Materialien zum Einsatz kommen.

In einer weiteren Ausführung der Erfindung gibt ein Aufbauparameter für jeden Volumenbereich bzw. jede einzelne Schicht eines Volumenbereiches eine bestimmte Materialdichte und/oder Schichtdicke vor, d.h. nimmt Einfluß auf die Art und Weise des schichtweisen Materialauftrags von zu verfestigendem Material.

In einer weiteren Ausführung der Erfindung legt ein Aufbauparameter die Aufbaurichtung der zu verfestigenden Volumenbereiche fest.

Alle genannten Aufbauparameter können je nach Anwendungsfall und den gewünschten Eigenschaften des herzustellenden Bauteils einzeln oder in beliebiger Kombination miteinander verwendet werden. Die Aufbauparameter können dabei je nach dem zur Anwendung kommenden additiven Fertigungsverfahren oder je nach gewünschtem Ergebnis algorithmisch, zufällig oder durch Meß-oder Sensordaten beeinflußt, gewählt oder analytisch oder durch Simulation errechnet werden. Beispielsweise erfolgt die Auswahl eines bestimmten Füllmusters aus einer Anzahl von möglichen vordefinierten Füllmustern oder aber die Berechnung eines neuen Füllmusters für einen Volumenbereich oder einen Teil eines Volumenbereiches unter Verwendung von Meß- oder Sensorwerten, erhalten beispielsweise durch Messung der Verzugsspannung. Die Auswahl bzw. Berechnung des Füllmusters kann aber auch unter Verwendung von Ergebnissen einer Simulation oder einer analytische Berechnung erfolgen.

Sowohl die Partitionierung, als auch die Festlegung der Aufbauparameter für die einzelnen Volumenbereiche erfolgt dabei stets unter dem Gesichtspunkt der Vermeidung bzw. Verringerung von Materialspannungen, Materialverzug oder sonstigen nicht erwünschten Verformungen des Bauteils. Zugleich ergibt sich daraus eine Vielzahl von Möglichkeiten, Eigenschaften des herzustellenden Bauteils, wie beispielsweise mechanische oder strukturelle Eigenschaften, gezielt zu beeinflussen. Beispielsweise kann die interne Struktur des Bauteils durch gezielt variierte Energieeinträge und/oder unterschiedlich dichte Volumenbereiche gezielt beeinflußt werden.

In einer weiteren bevorzugten Ausführungsform der Erfindung beschreibt das Datenmodell eine Aufteilung des Bauteilinneren in eine Anzahl von Volumenbereiche sowie eine separate Aufteilung der Bauteiloberfläche in eine Anzahl von Volumenbereiche.

Durch eine separate, das heißt von der Aufteilung des Bauteilinneren unabhängige Aufteilung der Bauteiloberfläche zum Erreichen eines spannungsreduzierten Aufbaus ist es nicht nur möglich, die Bauteiloberfläche unabhängig von dem Bauteilinneren durch ein Datenmodell zu beschreiben und mit Hilfe des entsprechenden Datenmodells den Aufbau der Bauteiloberfläche unabhängig von dem Bauteilinneren durchzuführen. Eine voneinander unabhängige und getrennte, jedoch aufeinander abgestimmte Partitionierung ermöglicht auch eine optimierte Ausbildung benachbarter Volumenbereiche zur Weiterleitung und Aufnahme der verbleibenden Spannungen. Eine Grenzflächenoptimierung zur Spannungsreduzierung ist daher nicht nur für das Bauteilinnere, sondern unabhängig davon auch für die Bauteiloberfläche möglich.

Ein Ausführungsbeispiel der Erfindung wird nachfolgend anhand der Zeichnungen näher erläutert. Hierbei zeigen:
- Fig. 1: eine perspektivische Ansicht eines würfelförmigen Ausschnittes aus einem ersten Bauteil mit mehreren Volumenbereichen,
- Fig. 2: einen Schnitt durch einen Teil eines zweites Bauteils mit mehreren Volumenbereichen.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

Unter Verwendung eines zuvor mit Hilfe eines Computerprogramms, gegebenenfalls unter Verwendung von Meß- oder Sensordaten erzeugten Datenmodells werden in einer Steuereinheit einer Schichtbauanlage Steuerungsdaten zur Steuerung der Schichtbauanlage erzeugt. Die unter Verwendung dieser Steuerungsdaten angesteuerte Schichtbauanlage erzeugt unter Ausführung eines Schichtaufbauverfahrens ein durch das Datenmodell beschriebenes Bauteil 1.

Das verwendete Datenmodell beschreibt eine vollständige Aufteilung des Bauteils 1 in eine Anzahl von 3D-Partitionen 2, wobei wenigstens eine 3D-Partition 2 mehr als eine Aufbauschicht 3 umfaßt. Wenigstens eine der 3D-Partitionen 2 weist eine schräg zur Aufbaurichtung 4 verlaufende Außenfläche 5 auf. Das Datenmodell definiert für jede 3D- Partition 2 wenigstens einen Aufbauparameter. Entsprechend dieser Bauteilbeschreibung erfolgt der Aufbau des Bauteils 1 durch die Schichtbauanlage.

Das erfindungsgemäße Verfahren zeichnet sich dadurch aus, daß das Bauteil 1 unter Ausbildung schichtübergreifender Volumenbereiche 2 aufgebaut wird, deren Außenflächen 5 schräg zu der Aufbaurichtung 4 verlaufen, Dadurch weisen übereinanderliegende, benachbarte Schichten 3 jedes dieser Volumenbereiche 2 unterschiedliche Querschnittsflächen aufweisen derart, daß bei der Bauteilerzeugung entstehende Spannungen zumindest anteilig in unterschiedliche Richtungen geleitet werden.

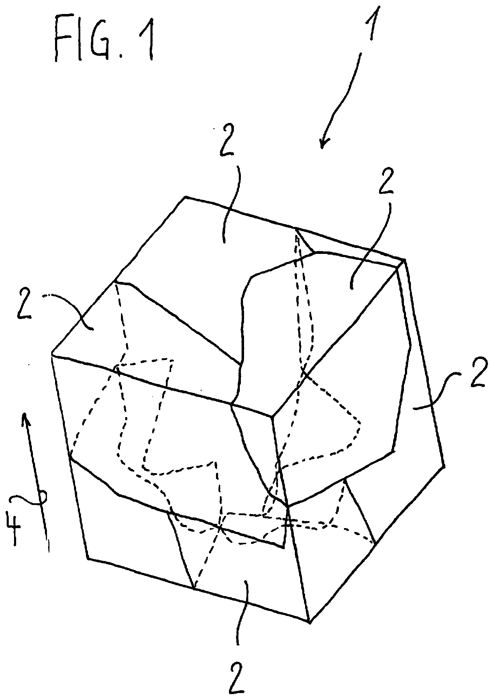

Beispielhaft ist in Fig. 1 ein würfelförmiger Ausschnitt eines realen ersten Bauteil 1 mit mehreren, sich voneinander unterscheidenden, unregelmäßigen Partitionen 2 perspektivisch dargestellt.

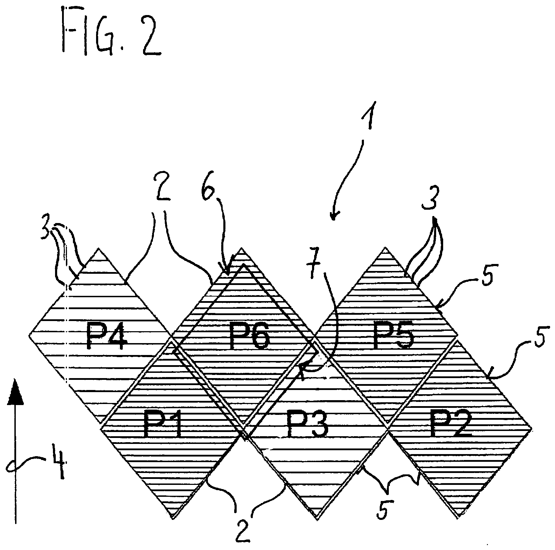

Einen Schnitt durch einen Teil eines fiktiven zweiten Bauteils 1 mit mehreren Partitionen 2 zeigt Fig. 2. Zu Anschauungszwecken ist eine vereinfachte, regelmäßige Aufteilung des Bauteils 1 in Partitionen 2 dargestellt.

Wie aus der Abbildung ersichtlich ist, umfaßt jede Partition 2 mehrere Aufbauschichten 3, wobei die Dicke der Aufbauschichten 3 der Partitionen P3, P4 größer ist als die Dicke der Aufbauschichten 3 der übrigen Partitionen P1, P2, P5 und P6. Aufgrund der hier beispielhaft gezeigten besonderen Form der Partitionen 2 ist in der abgebildeten Ausführungsform eine nahezu frei wählbare Aufbaureihenfolge möglich, bei der Partitionen 2 gruppenweise nacheinander aufgebaut werden können. Der Aufbau der Partitionen 2 erfolgt dabei nacheinander, jeweils Schicht für Schicht, in der Reihenfolge P1 bis P6, wobei zunächst die Gruppe P1, P2, P3 und anschließend die Gruppe P4, P5, P6 aufgebaut wird. Bei dem Aufbau der Partitionen 2 können für jede Schicht 3 und/oder jede Partition 2 andere Aufbauparameter verwendet werden.

Durch einen Offset von Partitionen können Spalten 6 und Überlappbereichen 7 gebildet werden, die während des Verfestigungsschrittes mehrfach bestrahlt werden. Beispielhaft ist in Fig. 2 ein Offset der Partition P6 dargestellt.

Kommt ein Datenmodell zum Einsatz, das neben einer Aufteilung des Bauteilinneren in eine Anzahl von 3D-Partitionen auch eine Aufteilung der Bauteiloberfläche in eine Anzahl von 3D-Partitionen beschreibt, können sowohl die Bauteilhülle (nicht dargestellt), als auch das Bauteilinnere spannungsoptimiert aufgebaut werden.

### Bezugszeichenliste

- 1: Bauteil
- 2: Volumenbereich
- 3: Schicht
- 4: Aufbaurichtung
- 5: Außenfläche
- 6: Spalte
- 7: Überlappbereich

## Patentansprüche

1. Verfahren zum schichtweisen Aufbau eines Bauteils (1) durch additive Fertigung mit Hilfe eines Datenmodells, wobei das Datenmodell eine wenigstens teilweise Aufteilung des Bauteils (1) in eine Anzahl von 3D-Volumenbereiche (2) beschreibt, wobei wenigstens einer der 3D-Volumenbereiche (2) mehr als eine Aufbauschicht (3) umfaßt und eine schräg zur Aufbaurichtung (4) verlaufende Außenfläche (5) aufweist, wodurch dieser 3D-Volumenbereich (2) sich in Aufbaurichtung (4) ändernde Querschnittsflächen aufweist derart, daß bei der Bauteilerzeugung entstehende Spannungen an der Außenfläche (5) schräg zu der Aufbaurichtung (4) gerichtet sind und daher zumindest anteilig in unterschiedliche Richtungen geleitet werden, **dadurch gekennzeichnet, daß** mindestens einer der 3D-Volumenbereiche (2) einen dreidimensionalen Offset zur Erzeugung eines Überlappbereiches zwischen mindestens zwei 3D-Volumenbereichen (2) aufweist.

2. Verfahren nach Anspruch 1, **dadurch gekennzeichnet, daß** der wenigstens eine der 3D-Volumenbereiche (2) wenigstens Teile von mindestens zwei benachbarten Aufbauschichten (3) umfaßt.

3. Verfahren nach Anspruch 1 oder 2, **dadurch gekennzeichnet, daß** mindestens einer der 3D-Volumenbereiche (2) einen dreidimensionalen Offset zur Erzeugung eines Spaltes zwischen mindestens zwei 3D-Volumenbereichen (2) aufweist.

4. Verfahren nach einem der Ansprüche 1 bis 3, **dadurch gekennzeichnet, daß** der Offset in unterschiedlichen Raumrichtungen unterschiedlich groß ist.

5. Verfahren nach einem der Ansprüche 1 bis 4, **dadurch gekennzeichnet, daß** das Datenmodell für jeden 3D-Volumenbereich (2) wenigstens einen Aufbauparameter definiert, wobei es sich bei dem Aufbauparameter um ein Füllmuster und/oder einen Energieeintrag handelt.

6. Verfahren nach einem der Ansprüche 1 bis 5, **dadurch gekennzeichnet, daß** das Datenmodell eine Aufteilung des Bauteilinneren in eine Anzahl von 3D-Volumenbereiche (2) sowie eine separate Aufteilung der Bauteiloberfläche in eine Anzahl von 3D-Volumenbereiche (2) beschreibt.

7. Verfahren nach Anspruch 1, **dadurch gekennzeichnet, daß** derjenige wenigstens eine 3D-Volumenbereich (2), der mehr als eine Aufbauschicht (3) umfaßt, in Aufbaurichtung übereinanderliegende, benachbarte Schichten (3) mit unterschiedlichen Querschnittsflächen aufweist.

8. Verfahren nach einem der Ansprüche 1 bis 7, **dadurch gekennzeichnet, daß** einzelne 3D-Volumenbereiche (2) über mehrere Aufbauschichten (3) hinweg aufgebaut werden, bevor weitere 3D-Volumenbereiche (2) ebenfalls über mehrere Aufbauschichten (3) hinweg aufgebaut werden.

9. Schichtbauanlage zum schichtweisen Aufbau eines Bauteils (1), umfassend eine Steuereinheit, **dadurch gekennzeichnet, daß** die Steuereinheit zur Durchführung des Verfahrens nach einem der Ansprüche 1 bis 8 ausgebildet ist.

10. Computerprogramm umfassend Befehle, die bewirken, daß die Schichtbauanlage nach Anspruch 9 die Verfahrensschritte nach Ansprüchen 1 bis 8 ausführt.

## Claims

1. A method for layered building a component (1) by additive fabrication with the aid of a data model, wherein the data model describes an at least partial division of the component (1) into a number of 3D volume regions (2), at least one of the 3D volume regions encompassing more than one build layer (3) and comprising an external surface (5) extending obliquely to the building direction (4), with the result that this 3D volume region (2) has cross-sectional areas that change in the build direction (4) in such a way that stresses at the partition boundaries occurring upon component production are oriented obliquely to the build direction and therefore are conveyed at least in part in different directions, **characterized in that** at least one of the 3D volume regions (2) exhibits a threedimensional offset for generating an overlap region between at least two 3D volume regions (2).

2. The method according to claim 1, **characterized in that** the at least one of the 3D volume regions (2) encompasses at least parts of at least two adjacent build layers (3).

3. The method according to claim 1 or 2, **characterized in that** the at least one of the 3D volume regions (2) exhibits a threedimensional offset for generating a gap between at least two 3D volume regions (2).

4. The method according to one of claims 1 to 3, **characterized in that** the offset has a different size in different spatial directions.

5. The method according to one of claims 1 to 4, **characterized in that** the data model defines at least one build parameter for each 3D volume region (2), the build parameter being a fill pattern and/or an energy input.

6. The method according to one of claims 1 to 5, **characterized in that** the data model describes a division of the component interior into a number of 3D volume regions (2), as well as a separate division of the component surface into a number of 3D volume regions (2).

7. The method according to claim 1, **characterized in that** the at least one of the 3D volume regions (2) which encompasses more than one build layer (3) has superimposed adjacent layers (3) exhibiting different cross-sectional areas.

8. The method according to one of claim 1 to 7, **characterized in that** individual 3D volume regions (2) are built up over several build layers (3) before further 3D volume regions (2) are built, likewise over several build layers (3).

9. A layer manufacturing system for layered building of a component (1), comprising a control unit, **characterized in that** the control unit is embodied to carry out the method according to one of claims 1 to 8.

10. A computer program having computer program instructions causing the layer manufacturing system according to claim 9 to carry out the method steps according to claims 1 to 8.

## Revendications

1. Procédé de construction couche par couche d'un composant (1) par fabrication additive à l'aide d'un modèle de données, dans lequel le modèle de données décrit une subdivision au moins partielle du composant (1) en un certain nombre de régions de volume 3D (2), dans lequel au moins l'une des régions de volume 3D (2) comprend plus d'une couche de construction (3) et présente une surface extérieure (5) s'étendant de manière oblique par rapport à la direction de construction (4), d'où il résulte que ladite région de volume 3D (2) présente des surfaces de section transversale qui varient dans la direction de construction (4) de manière à ce que les contraintes apparaissant sur la surface extérieure (5) lors de la création des composants soient orientées de manière oblique par rapport à la direction de construction (4) et par conséquent se répartissent au moins proportionnellement dans des directions différentes, **caractérisé en ce qu'**au moins l'une des régions de volume 3D (2) présente un décalage tridimensionnel permettant de créer une région de chevauchement entre au moins deux régions de volume 3D (2).

2. Procédé selon la revendication 1, **caractérisé en ce que** ladite au moins une des régions de volume 3D (2) comprend au moins des parties d'au moins deux couches de construction (3) adjacentes.

3. Procédé selon la revendication 1 ou 2, **caractérisé en ce qu'**au moins l'une des régions de volume 3D (2) présente un décalage tridimensionnel permettant de créer un espace entre au moins deux régions de volume 3D (2).

4. Procédé selon l'une des revendications 1 à 3, **caractérisé en ce que** le décalage présente des valeurs différentes dans des directions spatiales différentes.

5. Procédé selon l'une des revendications 1 à 4, **caractérisé en ce que** le modèle de données définit au moins un paramètre de construction pour chaque région de volume 3D (2), dans lequel le paramètre de construction est un motif de remplissage et/ou un apport d'énergie.

6. Procédé selon l'une des revendications 1 à 5, **caractérisé en ce que** le modèle de données décrit une subdivision de l'intérieur du composant en un certain nombre de régions de volume 3D (2) et une subdivision séparée de la surface du composant en un certain nombre de régions de volume 3D (2).

7. Procédé selon la revendication 1, **caractérisé en ce que** ladite au moins une région de volume 3D (2), qui comprend plus d'une couche de construction (3), présente des couches adjacentes (3) avec des surfaces de section transversale différentes qui sont superposées dans la direction de construction.

8. Procédé selon l'une des revendications 1 à 7, **caractérisé en ce que** des régions de volume 3D (2) individuelles sont construites sur plusieurs couches de construction (3) avant que d'autres régions de volume 3D (2) soient également construites sur plusieurs couches de construction (3).

9. Installation de construction en couches pour la construction couche par couche d'un composant (1), comprenant une unité de commande, **caractérisée en ce que** l'unité de commande est conçue pour la mise en œuvre du procédé selon l'une des revendications 1 à 8.

10. Programme informatique comprenant des instructions qui font en sorte que l'installation de construction en couches selon la revendication 9 exécute les étapes du procédé selon les revendications 1 à 8.
